(19) **Europäisches Patentamt**
**European Patent Office**
**Office européen des brevets**

(11) **EP 4 059 133 B1**

(12) **EUROPÄISCHE PATENTSCHRIFT**

(45) Veröffentlichungstag und Bekanntmachung des Hinweises auf die Patenterteilung:
**25.06.2025 Patentblatt 2025/26**

(21) Anmeldenummer: **20829177.3**

(22) Anmeldetag: **13.11.2020**

(51) Internationale Patentklassifikation (IPC):
*G01L 5/00* (2006.01) *H02P 21/00* (2016.01)

(52) Gemeinsame Patentklassifikation (CPC):
**H02P 21/0025; G01L 5/0066;** H02P 2205/05

(86) Internationale Anmeldenummer:
**PCT/AT2020/060403**

(87) Internationale Veröffentlichungsnummer:
**WO 2021/092641 (20.05.2021 Gazette 2021/20)**

(54) **VERFAHREN UND SYSTEM ZUM KALIBRIEREN EINER STEUEREINRICHTUNG EINES ELEKTROMOTORS**

METHOD AND SYSTEM FOR CALIBRATING A CONTROL DEVICE OF AN ELECTRIC MOTOR

PROCÉDÉ ET SYSTÈME POUR ÉTALONNER UN DISPOSITIF DE COMMANDE D'UN MOTEUR ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.11.2019 AT 509742019**

(43) Veröffentlichungstag der Anmeldung:
**21.09.2022 Patentblatt 2022/38**

(73) Patentinhaber: **AVL List GmbH**
**8020 Graz (AT)**

(72) Erfinder:
• **DUCHI, Francesco**
**8020 Graz (AT)**
• **PROIER, Pirmin**
**8020 Graz (AT)**
• **MODER, Jakob**
**8800 Unzmarkt (AT)**

• **TEICHMANN, Rüdiger**
**8075 Hart bei Graz (AT)**

(74) Vertreter: **Wallinger Ricker Schlotter Tostmann Patent- und Rechtsanwälte mbB**
**Zweibrückenstraße 5-7**
**80331 München (DE)**

(56) Entgegenhaltungen:
EP-A2- 1 081 845       WO-A1-2019/144171
DE-A1- 102014 213 446   US-A1- 2015 101 421
US-A1- 2017 032 282

• **SCHRAMM ANDREAS ET AL: "Methods for measuring torque ripples in electrical machines", 2017 IEEE INTERNATIONAL ELECTRIC MACHINES AND DRIVES CONFERENCE (IEMDC), IEEE, 21 May 2017 (2017-05-21), pages 1 - 8, XP033137248, DOI: 10.1109/IEMDC.2017.8002175**

**Beschreibung**

Die Erfindung betrifft ein Verfahren zum Kalibrieren einer Steuereinrichtung, insbesondere Invertersteuereinrichtung, eines Elektromotors, insbesondere Drehstrommotors, in welchem der Elektromotor als Teil eines Kraftflusses betrieben wird und Kraftmessungen mittels Piezoelementen durchgeführt werden, wobei die Piezoelemente in der Weise in dem Kraftfluss angeordnet sind, dass der Kraftfluss, insbesondere ausschließlich, an den Piezoelementen anliegt. Des Weiteren betrifft die Erfindung ein Verfahren zum Regeln eines Elektromotors, insbesondere Drehstrommotors, wobei der Elektromotor als Teil eines Kraftflusses betrieben wird und eine Kraftmessung mittels Piezoelementen durchgeführt wird, welche in der Weise in dem Kraftfluss angeordnet sind, dass der Kraftfluss, insbesondere ausschließlich, an den Piezoelementen anliegt. Darüber hinaus betrifft die Erfindung Systeme zum Durchführen der genannten Verfahren.

Aus dem Stand der Technik ist es bekannt, zum Betreiben von Elektromotoren Stromgeräte zu verwenden, welche aus einem starren Spannungssystem, wie Stromnetz oder einer Batterie, ein variables Spannungssystem, wie Gleichstrom, Wechselstrom oder Drehstrom erzeugen können.

Insbesondere für Drehstrommotoren ist es notwendig, die Gleichspannung aus der Stromversorgung in eine je nach Leistungsanforderung geeignete Wechselspannung zu transformieren. Zur Steuerung der Elektromotoren kommen daher im Allgemeinen sogenannte Invertersteuerungen zum Einsatz, siehe DE 10 2014 213446 A1.

Des Weiteren ist es aus dem Stand der Technik bekannt, mittels eines Messflansches mit Piezoelementen Kräfte bzw. Drehmomente an einer Welle zu messen oder die Kräfte bzw. Drehmomente an einer Welle über Reaktionskräfte zu bestimmen, welche zwischen einer Lagervorrichtung der Welle und einer Abstützungsvorrichtung der Lagervorrichtung wirken, wobei die Lagervorrichtung insbesondere durch eine Elektromaschine gebildet wird. Dies ist beispielsweise in dem Dokument WO 2019/144172 A1 beschrieben. Weiterhin ist aus dem Dokument WO 2019/144171 A1 bekannt, Drehmomentkomponenten auf der Grundlage eines Gleichungssystems von Kraftmessungen verschiedener Piezoelemente zu bestimmen.

Ausgehend von diesem Stand der Technik ist es eine Aufgabe der Erfindung, ein verbessertes Verfahren und System zum Kalibrieren einer Steuereinrichtung eines Elektromotors und ein verbessertes Verfahren und System zum Regeln eines Elektromotors bereitzustellen.

Diese Aufgabe wird durch die Verfahren und Systeme gemäß den unabhängigen Ansprüchen gelöst. Vorteilhafte Ausgestaltungen werden in den Unteransprüchen definiert.

Ein erster Aspekt der Erfindung betrifft ein Verfahren zum Kalibrieren einer Steuereinrichtung, insbesondere Invertersteuereinrichtung, eines Elektromotors, folgende Arbeitsschritte aufweisend:

> Betreiben des Elektromotors als Teil eines Kraftflusses;
> Durchführen einer Kraftmessung mittels Piezoelementen, welche in der Weise in dem Kraftfluss eingeordnet sind, dass der Kraftfluss, insbesondere ausschließlich, an den Piezoelementen anliegt; und
> Anpassen einer Steuercharakteristik der Steuereinrichtung auf der Grundlage wenigstens einer aus der Kraftmessung abgeleiteten Kraftkomponente, insbesondere einer Änderung der wenigstens einen Kraftkomponente und/oder wenigstens einer aus der Kraftmessung abgeleiteten Drehmomentkomponente, insbesondere einer Änderung der Drehmomentkomponente.

Vorzugsweise weist der Elektromotor dabei eine Welle auf oder wirkt mit dieser zusammen, welche einen Kraftfluss von oder zu dem Elektromotor überträgt. Weiter vorzugsweise ist das Verfahren computer-gestützt.

Ein zweiter Aspekt der Erfindung betrifft ein Verfahren zum Regeln eines Elektromotors, insbesondere Drehstrommotors, folgende Arbeitsschritte aufweisend:

> Betreiben des Elektromotors als Teil eines Kraftflusses;
> Durchführen einer Kraftmessung mittels Piezoelementen, welche in der Weise in dem Kraftfluss angeordnet sind, dass der Kraftfluss, insbesondere ausschließlich, an den Piezoelementen anliegt; und
> Einstellen von wenigstens einem Steuerparameter der Elektromaschine auf der Grundlage wenigstens einer aus der Kraftmessung abgeleiteten Kraftkomponente, insbesondere einer Änderung wenigstens einer Kraftkomponente, und/oder wenigstens einer aus der Kraftmessung abgeleiteten Drehmomentkomponente, insbesondere einer Änderung der Drehmomentkomponente.

Vorzugsweise weist der Elektromotor eine Welle auf oder wirkt mit einer Welle zusammen, welche einen Kraftfluss von oder zu dem Elektromotor überträgt. Weiter vorzugsweise ist das Verfahren computer-gestützt.

Ein dritter Aspekt der Erfindung betrifft ein System zum Kalibrieren einer Steuereinrichtung, insbesondere Invertersteuereinrichtung, eines Elektromotors, insbesondere Drehstrommotors, welcher Teil eines Kraftflusses ist. Vorzugsweise weist das System auf:

Piezoelemente zum Durchführen einer Kraftmessung, wobei die Piezoelemente in dem Kraftfluss in der Weise angeordnet sind, dass der Kraftfluss, insbesondere ausschließlich, an den Piezoelementen anliegt;

Auswertmittel, eingerichtet zum Auswerten wenigstens einer Kraftkomponente, insbesondere einer Änderung der wenigstens einen Kraftkomponente, und/oder wenigstens einer Drehmomentkomponente, insbesondere einer Änderung der wenigstens einen Drehmomentkomponente, aus der Kraftmessung; und

Mittel, eingerichtet zum Anpassen einer Steuercharakteristik der Steuereinrichtung auf der Grundlage der wenigstens einen der Kraftmessung abgeleiteten Kraftkomponente und/oder der wenigstens einen aus der Kraftmessung abgeleiteten Drehmomentkomponente.

Vorzugsweise weist der Elektromotor eine Welle auf oder wirkt mit einer Welle zusammen, welche einen Kraftfluss von oder zu dem Elektromotor überträgt.

Ein vierter Aspekt der Erfindung betrifft ein System zum Regeln eines Elektromotors, insbesondere Drehstrommotors, welcher Teil eines Kraftflusses ist, aufweisend:

Piezoelemente, eingerichtet zum Durchführen einer Kraftmessung, wobei die Piezoelemente in dem Kraftfluss in der Weise angeordnet sind, dass der Kraftfluss, insbesondere ausschließlich, an den Piezoelementen anliegt;

Auswertmittel, eingerichtet zum Ableiten wenigstens einer Kraftkomponente, insbesondere einer Änderung der wenigstens einen Kraftkomponente, und/oder wenigstens einer Drehmomentkomponente, insbesondere eine Änderung der wenigstens einen Drehmomentkomponente, aus der Kraftmessung; und

Steuermittel, eingerichtet zum Einstellen von wenigstens einem Steuerparameter der Elektromaschine auf der Grundlage der wenigstens einen aus der Kraftmessung abgeleiteten Kraftkomponente und/oder der wenigstens einen aus der Kraftmessung abgeleiteten Drehmomentkomponente.

Vorzugsweise weist der Elektromotor eine Welle auf oder wirkt mit einer Welle zusammen, welche einen Kraftfluss von dem Elektromotor oder zu dem Elektromotor überträgt.

Ein fünfter Aspekt der Erfindung betrifft Prüfstand für einen Elektromotor, wobei der Prüfstand eine Abstützeinrichtung und eine Einrichtung zum Aufbringen einer Last, insbesondere ein Dynamometer, aufweist und der Elektromotor in einem Kraftfluss zwischen der Abstützeinrichtung und der Last des Prüfstands anordenbar ist, wobei der Prüfstand des Weiteren ein System zum Kalibrieren einer Steuereinrichtung eines Elektromotors aufweist.

Ein Kraftfluss im Sinne der Erfindung ist vorzugsweise ein Weg einer Kraft und/oder eines Drehmoments in einem mechanischen System von einem Angriffspunkt, insbesondere einer Stelle der Einleitung, bis zu einer Stelle oder mehreren Stellen, an der oder denen die Kraft und/oder das Drehmoment durch eine Reaktionskraft und/oder ein Reaktionsmoment aufgenommen werden. Vorzugsweise setzt sich der Kraftfluss aus einer Kraft, insbesondere einer Querkraft zur Drehrichtung der Welle, und/oder einem Drehmoment, insbesondere um die Drehachse, zusammen.

Ein Leistungsfluss im Sinne der Erfindung ist vorzugsweise ein Weg einer Übertragung von Leistung in einem mechanischen System von einer Stelle der Einleitung bis zu einer Stelle oder mehreren Stellen, an welchen die Leistung abgenommen wird.

Ein Piezoelement im Sinne der Erfindung ist vorzugsweise ein Messelement, welches eingerichtet ist, eine Kraft, welche über zwei an das Piezoelement anliegende Flächen wirkt, zu messen. Vorzugsweise besteht ein Piezoelement aus dem Piezokristall sowie einer Ladungsableitung bzw. einer elektrischen Verschaltung.

Ein Elektromotor im Sinne der Erfindung ist vorzugsweise ein elektromechanischer Energiewandler, welcher vorzugsweise kinetische Energie, insbesondere eine Rotation, in elektrische Energie oder umgekehrt, von elektrischer Energie in kinetische Energie umwandelt.

Kalibrieren im Sinne der Erfindung ist vorzugsweise ein Beaufschlagen einer Steuereinrichtung mit Steuerdaten. Vorzugsweise wird ein Kalibrieren beim Abstimmen und/oder Optimieren des Steuerns eines Elektromotors eingesetzt.

Ein Mittel im Sinne der Erfindung kann hard- und/oder softwaretechnisch ausgebildet sein und insbesondere eine, vorzugsweise mit einem Speicher und/oder Bussystem daten- bzw. signalverbundene, insbesondere digitale, Verarbeitungs-, insbesondere Mikroprozessoreinheit (CPU) und/oder ein oder mehrere Programme oder Programmmodule aufweisen. Die CPU kann ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus auszugeben. Ein Speichersystem kann ein oder mehrere, insbesondere verschiedene, Speichermedien, insbesondere optische, magnetische, Festkörper- und/oder andere nicht-flüchtige Medien aufweisen. Das Programm kann derart beschaffen sein, dass es die hier beschriebenen Verfahren verkörpert bzw. auszuführen imstande ist, so dass die CPU die Schritte solcher Verfahren ausführen kann und damit insbesondere einen Elektromotor kalibrieren oder steuern kann.

Eine Steuercharakteristik im Sinne der Erfindung ist vorzugsweise die Art und Weise, wie eine Steuereinrichtung den Elektromotor steuert oder regelt. Vorzugsweise ist die Steuercharakteristik durch ein Computerprogramm, das in einem Datenspeicher der Steuereinrichtung abgelegt ist und welches eine Zuordnungsvorschrift umsetzt, festgelegt. Die Zuordnungsvorschrift kann hierbei als Zuordnungsfunktion, aber auch als Tabelle hinterlegt sein. Weiters vorzugsweise wird die Steuercharakteristik durch Regler einer Regelstrecke beeinflusst.

Die meisten Invertersteuereinrichtungen für Elektromotoren führen die Kalibration der Invertersteuereinrichtung automatisch durch Messungen des Stroms und der Spannung nach einer ersten Installation durch. Dieses Verfahren ist einfach, führt aber vielfach zu keinem zufriedenstellenden Ergebnis. Eine manuelle Kalibration hingegen verbessert die Leistung um 10 bis 20 %, insbesondere unter besonderen Bedingungen, wie geringer Ladezustand der Batterie.

Bei einer gewöhnlichen manuellen Kalibration wird das effektive bzw. wirksame Drehmoment in einer Vielzahl von Betriebspunkten unter bestimmten Randbedingungen gemessen und eine Steuercharakteristik angepasst. Das Problem hierbei ist, dass es lange Zeit, bis zu mehrere Wochen, dauert, um ein solches manuelles Kalibrationsverfahren abzuschließen. Des Weiteren ist der einzige gemessene Effekt einer veränderten Invertersteuerungseinstellung ein effektives Drehmoment. Dynamische Drehmoment-Modi, welche insbesondere für einen Effizienzverlust verantwortlich sind, sind dagegen nicht feststellbar.

Die Erfindung verfolgt den Ansatz, eine Kalibrierung und damit auch eine Regelung des Elektromotors zu verbessern, indem eine mittels Piezoelementen durchgeführte Kraftmessung beim Erstellen oder Anpassen einer Steuercharakteristik oder sogar beim Einstellen von Steuerparametern berücksichtigt wird.

Durch die Kraftmessung mittels der Piezoelemente kann die Dynamik einer Kraftkomponente oder Drehmomentkomponente bestimmt werden. Insbesondere eine Drehmomentwelligkeit (Englisch: torque ripple) und/oder ein sogenanntes Rastmoment (Englisch: cogging torque) können auf diese Weise bestimmt werden und in der Steuercharakteristik der Steuereinrichtung oder direkt beim Regeln des Elektromotors durch die Steuereinrichtung berücksichtigt werden.

Dadurch, dass die Piezoelemente direkt in dem Kraftfluss zwischen dem Elektromotor und einer Einrichtung zum Aufbringen einer Last, insbesondere ein Dynamometer, bzw. deren Haltevorrichtung angeordnet sind, bleiben die Messungen nicht auf bestimmte Betriebspunkte beschränkt. Vielmehr können Kraftmessungen während des gesamten Betriebs des Elektromotors in allen Betriebspunkten vorgenommen werden. Auch bleiben das Verfahren zum Kalibrieren und das Verfahren zum Regeln nicht auf eine Prüfstandsanwendung beschränkt. Vielmehr können die Piezoelemente, mittels welcher die Kraftmessung durchgeführt wird, auch direkt in einem Antriebsstrang, in welchem der Elektromotor verbaut ist, beispielsweise in einem Fahrzeug, angeordnet werden. Hierdurch kann die Kraftmessung kontinuierlich zur Regelung des Elektromotors herangezogen werden.

Insbesondere kann mittels des erfindungsgemäßen Verfahrens eine Kalibration und Optimierung einer Steuereinrichtung eines Elektromotors automatisch durchgeführt werden. Hierbei kann eine hohe Genauigkeit der Messung der dynamischen Antwort und von Vibrationsmessungen erreicht werden. Indem in Bezug auf diese beiden Kriterien optimiert wird, kann darüber hinaus eine wesentliche Verbesserung der Steuerung eines Elektromotors erreicht werden. Insbesondere Drehmomentwelligkeiten und Energieverluste, beispielsweise durch Abwärme, können reduziert werden, insbesondere bis zu einem Minimum an Energieverlusten, welches durch Anpassungen am Steuergerät ohne Hardwareanpassungen erreicht werden kann.

Die im Nachfolgenden in Bezug auf die Verfahren des ersten Aspekts und des zweiten Aspekts der Erfindung beschriebenen Merkmale und Vorteile der vorteilhaften Ausgestaltungen gelten entsprechend auch für die anderen Aspekte der Erfindung und umgekehrt.

In einer vorteilhaften Ausgestaltung des Verfahrens ist der Elektromotor eine Drehstrom-Synchronmaschine oder Drehstrom-Asynchronmaschine und die Steuercharakteristik ist durch einen P-Anteil und/oder einen I-Anteil eines PI-Reglers oder eines PID-Reglers wenigstens eines Steuerparameters festgelegt.

In einer weiteren vorteilhaften Ausgestaltung des Verfahrens ist der Elektromotor eine Drehstrom-Synchronmaschine und der wenigstens eine Steuerparameter ist ein Polradstrom, insbesondere dessen Längskomponente und Querkomponente im komplexen Zeigerdiagramm. Dies ist besonders vorteilhaft, da insbesondere die Querkomponente des Polradstroms für die Drehmomenterzeugung zuständig ist. Drehmomentwelligkeiten, welche durch den Elektromotor erzeugt werden, oder Rastmomente können auf diese Weise besonders ausgeglichen werden.

In einer weiteren vorteilhaften Ausgestaltung ist der Elektromotor eine Drehstrom-Asynchronmaschine und der wenigstens eine Steuerparameter eine Ständerspannung und/oder eine stehende Frequenz oder der wenigstens eine Steuerparameter ein Ständerstrom und/oder eine Ständerfrequenz. Auch hierdurch können durch eine Konstruktion eines Elektromotors hervorgerufene schädliche Effekte, wie Drehmomentwelligkeit und/oder Rastmomente, besonders gut ausgeglichen werden.

In einer weiteren vorteilhaften Ausgestaltung ist wenigstens ein Kriterium für das Anpassen einer Steuercharakteristik oder das Einstellen von wenigstens einem Steuerparameter aus der folgenden Gruppe ausgewählt:

eine Intensität einer harmonischen Schwingung der Änderung des Drehmoments und/oder der Kraft ist; und/oder ein Integral der Intensität von Schwingungen der Änderung des Drehmoments und/oder der Kraft über ein vorgegebenes Frequenzspektrum.

Durch solche Kriterien in Bezug auf eine frequenzaufgelöste Schwingungsanalyse kann eine Aussage über das Schwingungsverhalten individueller Frequenzbereiche oder eines breiten Frequenzspektrums getroffen werden. Im Rahmen einer Optimierung wird die Intensität individueller Schwingungen und/oder der aufintegrierten Schwingungen verringert. Vorzugsweise wird eine solche Analyse im stationären Betrieb des Elektromotors vorgenommen.

In einer weiteren vorteilhaften Ausgestaltung des Verfahrens ist wenigstens ein Kriterium für das Anpassen einer Steuercharakteristik oder das Einstellen von wenigstens einem Steuerparameter aus der folgenden Gruppe ausgewählt:

eine Anstiegsdauer des Drehmoments von 10% einer Drehmomentanforderung bis 90% der Drehmomentanforderung;

eine Verzögerungszeit von einem Zeitpunkt einer Drehmomentanforderung bis zum Anstieg des Drehmoments; und/oder

eine Intensität eines Überschwingens eines Werts von 100% einer Drehmomentanforderung.

Durch solche Kriterien in Bezug auf einen dynamischen Schwingungsverlauf kann eine Aussage über die Reaktion eines Antriebsstrangs auf eine Drehmomentanforderung,

insbesondere dessen Schwingungsverhalten, getroffen werden. Im Rahmen einer Optimierung wird die Intensität von Überschwingungen, eine Dauer einer Verzögerungszeit und/oder eine Anstiegsdauer des Drehmoments verringert.

In einer weiteren vorteilhaften Ausgestaltung des Verfahrens werden Kraftkomponenten und Drehmomentkomponenten mittels eines Gleichungssystems auf der Grundlage von Messsignalen der einzelnen Piezoelemente bestimmt. Vorzugsweise werden Messsignale der einzelnen Piezoelemente in Anteile, welche zu den jeweiligen abzuleitenden Kraftkomponenten und/oder Drehkomponenten beitragen, zerlegt. Weiters vorzugsweise werden, insbesondere alle, Beiträge der einzelnen piezoelektrischen Messelemente zu den jeweiligen zu bestimmenden Kraftkomponenten und/oder Drehmomentkomponenten berücksichtigt. Durch den Einsatz eines Gleichungssystems, welches nach den jeweils zu bestimmenden Kraftkomponenten und/oder Drehkomponenten aufgelöst wird, können Messungen einer Vielzahl von Piezoelementen berücksichtigt werden. Darüber hinaus können alle Messungen eines Mehrkomponentensensors bzw. von Piezoelementen anteilig bei den zu bestimmenden Kraftkomponenten und/oder Drehkomponenten berücksichtigt werden. Hierdurch können insbesondere Kraftnebenschlüsse über nicht an einer Messung beteiligte Piezoelemente verringert oder sogar vermieden werden.

In einer weiteren vorteilhaften Ausgestaltung des Verfahrens wird der Elektromotor zusammen mit einer Welle, welche einen Kraftfluss vom oder zum Elektromotor überträgt, betrieben, wobei die Piezoelemente zwischen einem ersten Teil der Welle und einem zweiten Teil der Welle in der Weise angeordnet sind, dass mittels der Piezoelemente eine Kraft, insbesondere Scherkraft, zu dem ersten Teil und dem zweiten Teil messbar ist. Durch die Messung direkt in oder an der Welle kann eine besonders einfache Messanordnung verwirklicht werden.

In einer weiteren vorteilhaften Ausgestaltung des Verfahrens messen die Piezoelemente eine Kraft, insbesondere Scherkraft, zwischen dem Elektromotor und einer Abstützvorrichtung zum Abstützen des Elektromotors. In dieser Ausgestaltung sind die Piezoelemente zwischen dem Elektromotor und einer Abstützvorrichtung angeordnet. Mithin wird die Kraftmessung in dieser Ausgestaltung gegenüber einem raumfesten Bezugssystem, nämlich einem Antriebsstrangprüfstand bzw. dessen Grundplatte oder einem Fahrzeug, vorgenommen. Hierbei können Piezoelemente mit Transversaleffekt, Longitudinaleffekt oder auch Schereffekt zum Einsatz kommen, je nachdem, wie der Elektromotor an der Abstützvorrichtung gelagert wird. Durch diese Art der Anordnung des Kraftsensors wird eine rotierende Masse der Welle im Wesentlichen nicht verändert. Insbesondere wird ein Reaktionsmoment auf das an der Welle anliegende Drehmoment gemessen.

In einer weiteren vorteilhaften Ausgestaltung des Verfahrens wird der Elektromotor zusammen mit einer Welle, welche einen Kraftfluss von oder zu dem Elektromotor überträgt, betrieben, wobei ein Messsystem aus den Piezoelementen eine rotierenden Masse der Welle und/oder eine rotierende Masse rotierender Teile einer Gesamtheit aus Welle und dem Elektromotor nicht verändert.

Vorzugsweise werden die Verfahren auf einem Computer ausgeführt. Weitere Aspekte der Erfindung betreffen daher ein Computerprogramm, das Anweisungen umfasst, welche, wenn sie von einem Computer ausgeführt werden, diesen dazu veranlassen, die Schritte der Verfahren auszuführen, und ein computer-lesbares Medium, auf dem ein solches Computerprogramm gespeichert ist.

Weitere Merkmale und Vorteile ergeben sich aus der nachfolgenden Beschreibung in Bezug auf die Figuren. Es zeigen wenigstens teilweise schematisch:

**Fig. 1**     ein Ausführungsbeispiel eines Systems zum Kalibrieren einer Steuereinrichtung eines Elektromotors;

**Fig. 2**     ein Ausführungsbeispiel eines Verfahrens zum Kalibrieren einer Steuereinrichtung eines Elektromotors;

**Fig. 3** ein Ausführungsbeispiel eines Systems zum Regeln eines Elektromotors;

**Fig. 4** ein Ausführungsbeispiel eines Verfahrens zum Regeln eines Elektromotors;

**Fig. 5** eine erste Messanordnung mit Piezoelementen eines Ausführungsbeispiels des Systems zum Kalibrieren einer Steuereinrichtung oder des Systems zum Regeln eines Elektromotors;

**Fig. 6** eine zweite Messanordnung mit Piezoelementen eines Ausführungsbeispiels des Systems zum Kalibrieren einer Steuereinrichtung oder des Systems zum Regeln eines Elektromotors;

**Fig. 7** eine dritte Messanordnung mit Piezoelementen eines Ausführungsbeispiels des Systems zum Kalibrieren einer Steuereinrichtung oder des Systems zum Regeln eines Elektromotors;

**Fig. 8** ein Diagramm eines Frequenzspektrums von Schwingungen eines Elektromotors, welches mit dem Verfahren zum Kalibrieren einer Steuereinrichtung oder dem Verfahren zum Regeln eines Elektromotors bestimmt wurde;

**Fig. 9** ein weiteres Diagramm eines Frequenzspektrums, welches mit dem Verfahren zum Kalibrieren einer Steuereinrichtung oder dem Verfahren zum Regeln eines Elektromotors bestimmt wurde; und

**Fig. 10** zeigt ein Diagramm eines zeitlichen Verlaufs eines Drehmoments.

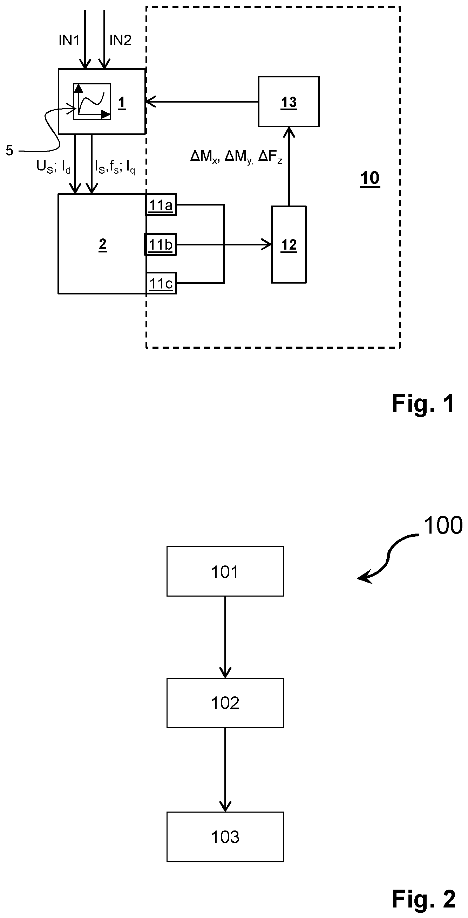

**Fig. 1** zeigt eine Gesamtheit aus einem Ausführungsbeispiel eines Systems 10 zum Kalibrieren einer Invertersteuereinrichtung 1 eines Elektromotors 2 und der zu kalibrierenden Invertersteuereinrichtung 1 sowie dem zu steuernden Elektromotor 2.

Im Nachfolgenden wird die Erfindung anhand dieser Invertersteuereinrichtung 1 einer Drehstrom-Synchronmaschine oder Drehstrom-Asynchronmaschine 2 beschrieben, wobei als Steuerparameter ein Polradstrom $I_d$, $I_q$ oder eine Ständerspannung $U_S$, Ständerfrequenz $f_S$ und Ständerstrom $I_S$ zum Einsatz kommen. Die beschriebenen Systeme und Verfahren können jedoch auch in Bezug auf andere Steuereinrichtungen 1 und Elektromotoren 2 zum Einsatz kommen.

In der gezeigten Invertersteuerung 1 ist eine Steuercharakteristik 5 hinterlegt. Mittels dieser Steuercharakteristik 5 wird auf der Grundlage von Eingangsgrößen IN1, IN2 der Elektromotor von der Steuereinrichtung 1 mittels Steuerparametern $I_d$, $I_q$, $I_S$, $f_S$, $U_S$ gesteuert.

Eingangsparameter IN1, IN2 sind beispielsweise eine Drehmomentanforderung, eine Drehzahlanforderung oder auch die Anforderung eines Bremsmoments.

Das System 10 zum Kalibrieren der Invertersteuerung weist vorzugsweise Piezoelemente 11a, 11b, 11c, Auswertmittel 12 und Mittel 13, eingerichtet zum Anpassen einer Steuercharakteristik 5, auf.

Die Piezoelemente 11a, 11b, 11c sind in der Weise in einem Kraftfluss, welcher den Elektromotor 2 umfasst, angeordnet bzw. angebracht, dass diese eine Kraftänderung oder eine Drehmomentänderung, welche auf den Elektromotor 2 wirkt oder von diesem ausgeübt wird, messen können. Auf der Grundlage dieser Messung von verschiedenen Piezoelementen 11a, 11b und 11c kann das Auswertmittel 12 eine Änderung wenigstens einer Kraftkomponente und/oder einer Drehmomentkomponente $\Delta M_X$, $\Delta M_Y$, $\Delta F_Z$; $\Delta F_X$, $\Delta F_Y$, $\Delta M_Z$ berechnen. In der vorliegenden Beschreibung und den Figuren wird die Erfindung rein beispielhaft in Bezug auf das Ermitteln von zwei Drehmomentkomponenten $\Delta M_X$, $\Delta M_Y$ und eine Kraftkomponente $\Delta F_Z$ erläutert. Als weiteres Beispiel können alternativ insbesondere auch die Änderungen von zwei Kraftkomponenten $\Delta F_X$, $\Delta F_Y$ und einer Drehmomentkomponente $\Delta M_Z$ ermittelt werden.

Die Mittel 13 zum Anpassen der Steuercharakteristik 5 können die Steuercharakteristik 5 auf der Grundlage von verschiedenen Kriterien, wie beispielsweise NVH-bezogenen Kriterien oder dynamikbezogenen Kriterien, kalibrieren. Hierbei ist eine Optimierung in Bezug auf diese Kriterien möglich, oder auch eine Abstimmung der Steuercharakteristik beispielsweise in Bezug auf eine bestimmte Invertersteuerung 1.

**Fig. 2** zeigt ein Blockdiagramm eines Verfahrens zum Kalibrieren einer Steuereinrichtung 100. Ein solches Verfahren ist insbesondere mittels des in Fig. 1 gezeigten Systems 10 zum Kalibrieren einer Steuereinrichtung ausführbar. Das System 10 weist hierfür vorzugsweise Mittel oder Module auf, welche hardwaretechnisch oder softwaretechnisch implementiert sind.

In einem ersten Arbeitsschritt 101 wird der Elektromotor als Teil eines Kraftflusses betrieben. Gesteuert wird der Elektromotor 2 dabei mittels der Invertersteuereinrichtung 1. Hierzu erzeugt die Invertersteuereinrichtung 1 elektrische Spannungssignale der Steuerparameter $I_d$, $I_q$; $I_S$, $f_S$, $U_S$ auf der Grundlage der Eingangsparameter IN1, IN2, welche einen Fahrerwunsch oder eine Anforderung durch ein Fahrzeug (nicht gezeigt) widerspiegeln. Mittels der Piezoelemente 11a, 11b, 11c wird eine Kraftmessung durchgeführt 102. Aus dieser Kraftmessung können einzelne Kraftkomponenten

und/oder Drehmomentkomponenten $\Delta M_X$, $\Delta M_Y$, $\Delta F_Z$ bzw. deren zeitliche Änderung abgeleitet werden. Diese zeitliche Änderung enthält Informationen über eine Drehmomentwelligkeit und/oder ein Rastmoment.

Um diese Drehmomentwelligkeit oder Rastmomente auszugleichen, wird die Steuercharakteristik 5, welche in der Invertersteuerung hinterlegt ist, in einem weiteren Arbeitsschritt 103 angepasst bzw. verändert 103.

Das System 10 aus Fig. 1 wird vorzugsweise auf einem Prüfstand für elektrische Antriebsstränge eingesetzt. Die Auswertmittel 12 sowie die Mittel 13 zum Anpassen der Steuercharakteristik können hierbei Teil des Prüfstands sein. Datensignale werden mit einer definierten Speicherrate, vorzugsweise 100 kHz, aufgezeichnet und einer Fast-Fourier-Transformationsanalyse unterzogen, um Schwingungsintensitäten in Abhängigkeit der Drehfrequenz des Rotors identifizieren zu können.

Von besonderer Wichtigkeit ist der Einsatz von Piezoelementen 11a, 11b, 11c als dynamische Kraft bzw. Drehmomentsensoren. Piezoelemente stellen für eine solche dynamische Messung eine ausreichende zeitliche Auflösung bereit.

Die Steuercharakteristik 5 bzw. deren veränderliche Parameter, insbesondere der I-Anteil eines dort hinterlegten PI-Reglers, werden vorzugsweise in der Weise verändert, dass die Kriterien optimiert werden. In dem Fall von NVH-bezogenen Kriterien und dynamikbezogenen Kriterien als Optimierungsziele muss hierbei im Regelfall der beste Kompromiss gefunden werden, da diese sich entgegenstehen.

Vorzugsweise bei dem Verfahren zum Kalibrieren und ggf. beim Optimieren kommt ein sogenanntes modellbasiertes Kalibrierungs-bzw. Optimierungsverfahren zum Einsatz.

Hierbei wird ein Modell entworfen, welches einen Zusammenhang zwischen den veränderlichen Parametern der Steuercharakteristik 5 und den Werten der Kriterien wiedergibt.

Dieses Modell kann beispielsweise eingesetzt werden, um in Prüfstandversuchen zielgerichtet jene Bereiche anzufahren, welche für Optima bzw. Kompromisse zwischen Optima besonders vielversprechend sind.

Eine Optimierung der Steuercharakteristik läuft vorzugsweise wie folgt ab: Zunächst wird ein Versuchsplan für die veränderlichen Parameter der Invertersteuereinrichtung, insbesondere eines P-Anteils oder eines I-Anteils, eines PI-Reglers der Steuerparameter $I_d$, $I_q$; $U_S$, $I_S$, $f_S$, erstellt. Auf der Grundlage dieser Einstellung der veränderlichen Parameter werden Versuche mit der in Fig. 1 gezeigten Anordnung der Gesamtheit durchgeführt. Der in den Versuchen jeweils erreichte Betriebsverlauf bzw. die einzelnen Betriebspunkte werden mittels Kriterien bewertet. Auf der Grundlage dieser Bewertung wird die Steuercharakteristik angepasst.

Diese Kriterien lassen sich ganz grundsätzlich in NVH-bezogene Kriterien und Dynamikbezogene Kriterien unterteilen.

Bei den NVH-bezogenen Kriterien sind insbesondere verschiedene harmonische Oberschwingungen sowie Amplitudenanalysen des Fastest Fourier-transformierten Drehmomentsignals, insbesondere dessen Integrales, besonders geeignet.

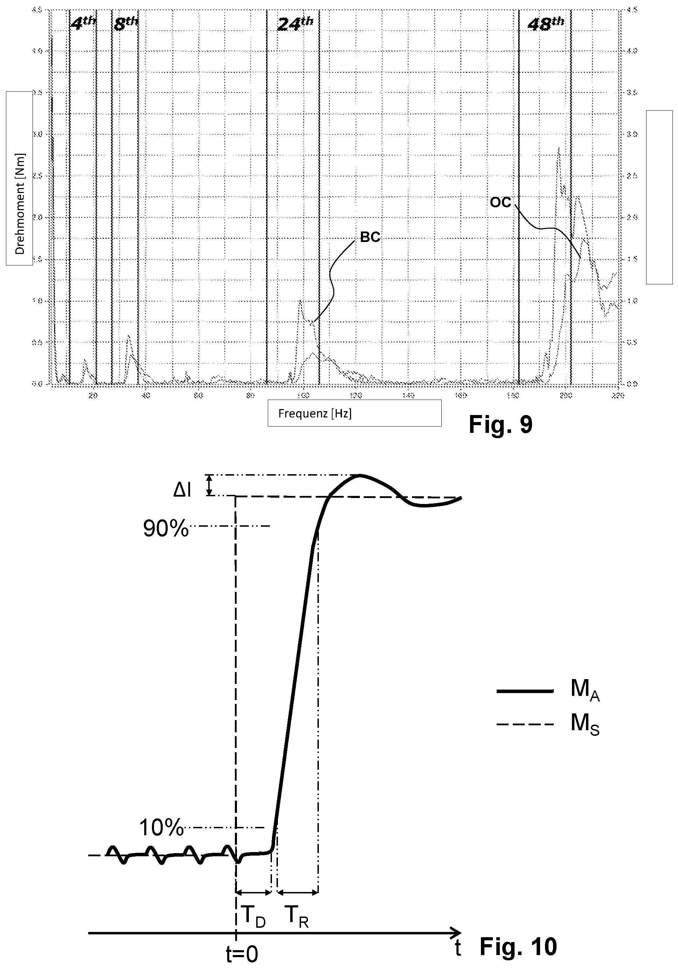

Bei den Dynamik-bezogenen Kriterien ist beispielsweise die sogenannte T90/T10-Anstiegszeit von Bedeutung. Dies ist jene Zeit, welche das Drehmoment benötigt, um bei einer Änderung der Drehmomentanforderung von 10 % auf 90 % des angeforderten Drehmoments zu gelangen. Weitere mögliche Kriterien sind eine Verzögerungszeit $T_D$ und eine Überschwingungsintensität $I_D$, wie in Bezug auf Fig. 10 unten beschrieben.

Die Kraftkomponenten $F_x(t)$ und $F_y(t)$ und Drehmomentkomponente $M_z(t)$ und die Kraftkomponente $F_z(t)$ sowie die Drehmomentkomponenten $M_x(t)$ und $M_y(t)$ können in an sich bekannter Weise mittels einer gezielten Anordnung von Vorzugsrichtungen der einzelnen Piezoelemente 11a, 11b, 11c und Aufsummierung der einzelnen Messsignale S1, S2, S3 ermittelt werden.

Auch andere Verfahren zur Bestimmung dieser Parameter können zum Einsatz kommen. Beispielsweise eine Zerlegung, insbesondere orthogonale Zerlegung, der Messsignale der einzelnen Piezoelemente 11a, 11b, 11c oder der aus den Messsignalen abgeleiteten, das heißt gemessenen Kräfte $F_1$, .., $F_i$.

Hierbei sind beispielsweise die zu bestimmenden Parameter $M_z$, $F_X$, $F_Y$ die Lösung eines Gleichungssystems, wobei für jedes Messsignal eine Gleichung wie folgt gilt:

$$S1 = a_{11} \cdot M_z + a_{12} \cdot Fx + a_{13} \cdot Fy$$

$$S2 = a_{21} \cdot M_z + a_{22} \cdot Fx + a_{23} \cdot Fy$$

$$S3 = a_{31} \cdot M_z + a_{32} \cdot Fx + a_{33} \cdot Fy$$

$$\vdots$$

$$SN = a_{N1} \cdot M_z \dots$$

S1, S2,...Si,..., SN sind hierbei die Messsignale der einzelnen Piezoelemente 11a, 11b, 11c,..., 11i,...,11N . Jeder Koeffizient a hängt von mehreren Faktoren ab, wie beispielsweise der jeweiligen Position des Messelements 11a, 11b, 11c,..., 11i,...,11N und der Orientierung der jeweiligen Vorzugsrichtung im Bezugssystem, einer Empfindlichkeit des jeweiligen Messelements 11a, 11b, 11c,..., 11i,...,11N und einem möglichen Signalverlust durch einen Kraftnebenschluss über ein Befestigungsmittel.

Um ein solches Gleichungssystem für das Drehmoment $M_z$, eine erste Querkraftkomponente Fx und eine zweite Querkraftkomponente $F_y$ aufzulösen, werden Messsignale von wenigstens drei Piezoelementen 11a, 11b, 11c, deren Vorzugsrichtungen in der Weise ausgerichtet sind, dass sie in oder parallel zu einer Ebene liegen, benötigt. Darüber hinaus dürfen wenigstens zwei der Vorzugsrichtungen weder parallel noch antiparallel ausgerichtet sein.

Für diesen beschriebenen allgemeinen Fall mit N = 3, d. h. mit drei Piezoelementen 11a, 11b, 11c ist die Lösung des oben dargestellten Gleichungssystems eindeutig. Werden weitere Messelemente zu dem Messsystem 1 hinzugefügt, so ist das Gleichungssystem mit drei zu bestimmenden Parametern $M_z$, $F_x$, $F_y$ überbestimmt, die Messgenauigkeit kann jedoch nochmals verbessert werden.

Im Fall von N = 4 können vier verschiedene Gleichungssysteme F (S1, S2, S3), F (S1, S2, S4), F (S1, S3, S4), F (S2, S3, S4) aufgestellt werden. Die für die einzelnen zu bestimmenden Parameter $M_z$, $F_x$, $F_y$ bestimmten Werte können dann addiert und gemittelt werden, d. h. in dem Fall von vier Piezoelementen 11a, 11b, 11c,..., 11i,...,11N durch vier dividiert werden. In ähnlicher Weise kann ein überbestimmtes Gleichungssystem F (S1, S2 ..., SN) aufgestellt werden, welches mittels einer Minimierungsaufgabe gelöst wird.

Ist eine allgemeine Lösung für das Gleichungssystem gefunden, kann die Berechnung der zu bestimmenden Parameter $M_z$, $F_x$, $F_y$ auf eine Matrixmultiplikation reduziert werden. Diese hat drei Zeilen und so viele Spalten, wie Messsignale S1, S2, S3, ... SN zur Verfügung stehen. Die Matrixelemente bzw. Koeffizienten bilden die jeweiligen Beiträge der einzelnen Sensoren zu den zu bestimmenden Parametern $M_z$, $F_x$, $F_y$ ab.

$$\begin{pmatrix} Fx \\ Fy \\ MB \end{pmatrix} = K \begin{pmatrix} c11 & c12 & c13 & ...c1N \\ c21 & c22 & c23 & ...c2N \\ c31 & c32 & c33 & ...c3N \end{pmatrix} \begin{pmatrix} s1 \\ s2 \\ s3 \\ ...sN \end{pmatrix}$$

Für die Zerlegung der Messsignale S1, S2,...Si,..., SN in Komponenten, welche zu den jeweiligen zu bestimmenden Parametern $M_z$, $F_x$, $F_y$ beitragen, ist es notwendig, dass die Lage der Piezoelemente 11a, 11b, 11c,..., 11i,...,11N und die Orientierung der Vorzugsrichtungen bekannt ist.

Die geometrischen Parameter können entweder aus einer Konstruktionszeichnung des Antriebsstrangprüfstands und aus der Kenntnis der Vorzugsrichtungen der Piezoelemente 11a, 11b, 11c,..., 11i,...,11N bestimmt werden.

Die Orientierung der Vorzugsrichtungen der Piezoelemente 11a, 11b, 11c,..., 11i,...,11N kann jedoch auch durch Ausmessen der Vorzugsrichtungen mittels einer Kalibrierungsmessung bestimmt werden. Vorzugsweise wird die Piezoelemente 11a, 11b, 11c,..., 11i,...,11N hierfür zwischen zwei ebene Platten eingespannt. In einem nächsten Schritt werden externe Querkräfte mit bekannter Richtung aufgebracht. Aus der Größe der einzelnen Messsignale S1, S2,...Si,..., SN im Verhältnis zum Betrag und zu der Richtung der eingeleiteten Querkräfte kann die Vorzugsrichtung der Piezoelemente 11a, 11b, 11c,..., 11i,...,11N in der Ebene, welche durch die Vorzugsrichtung der Piezoelemente 11a, 11b, 11c,..., 11i,...,11N aufgespannt wird, bestimmt werden.

In ähnlicher Weise kann durch das Aufbringen eines definierten Drehmoments $M_z$ und das Messen der einzelnen Messsignale S1, S2,...Si,..., SN ein Abstand der Piezoelemente 11a, 11b, 11c,..., 11i,...,11N von der Drehachse D bestimmt werden, wenn die Vorzugsrichtungen der einzelnen Piezoelemente 11a, 11b, 11c,..., 11i,...,11N bekannt sind.

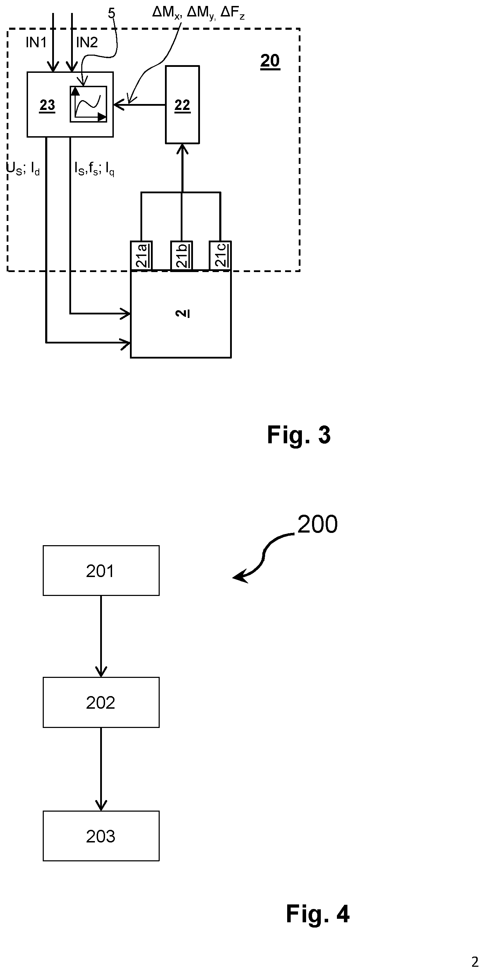

**Fig. 3** zeigt ein Ausführungsbeispiel eines Systems 20 zum Regeln eines Elektromotors 2, welcher Teil eines Kraftflusses ist.

Im Unterschied zu dem in Fig. 1 gezeigten System 10 werden die aus der Kraftmessung mittels der Piezoelemente 21a, 21b, 21c abgeleiteten Kraftkomponenten und/oder Drehmomentkomponenten $\Delta M_X$, $\Delta M_y$, $\Delta F_z$ direkt in dem Steuermittel 23, welches insbesondere eine Steuereinrichtung ist, berücksichtigt. Mithin sind diese vorzugsweisen als Eingangsgrößen in der in Fig. 3 gezeigten Steuercharakteristik 5 hinterlegt und in den Kennfeldern und Steuerfunktionen entsprechend berücksichtigt.

Entsprechend weist das System 20 nach Fig. 3 auch gegenüber dem System 10 nach Fig. 1 keine Mittel zum Anpassen der Steuercharakteristik 5 selbst auf, in dem Sinne, dass eine Steuercharakteristik 5 grundsätzlich verändert wird.

Das System 20 weist insbesondere Mittel oder Module auf, welche hardwaretechnisch oder softwaretechnisch implementiert sind und eingerichtet sind, um das in **Fig. 4** gezeigte Verfahren 200 zum Regeln eines Elektromotors 2 wie folgt auszuführen:
Der Elektromotor 2 wird als Teil eines Kraftflusses, insbesondere in einem Fahrzeug, betrieben 201. Während dieses Betriebs werden wiederum Kraftmessungen mittels Piezoelementen 21a, 21b, 21c durchgeführt 202.

Auch hier sind die Piezoelemente 21a, 21b, 21c in der Weise in dem Kraftfluss, welcher auch an dem Elektromotor 2 anliegt, angeordnet, dass der Kraftfluss, insbesondere ausschließlich, an den Piezoelementen 21a, 21b, 21c anliegt.

Auf der Grundlage einer in dem Steuermittel bzw. der Steuereinrichtung 23 hinterlegten Steuercharakteristik 5, welche insbesondere als Kennfeld oder Steuerfunktion hinterlegt ist, werden Steuerparameter $I_d$, $I_q$; $U_S$, $I_S$, $f_S$ der Elektromaschine 2 eingestellt 203, wobei, neben anderen Eingangsgrößen IN1, IN2, die von den Auswertmitteln 22 auf der Grundlage der Kraftmessung berechneten Kraftkomponenten bzw. und/oder Drehmomentkomponenten $\Delta M_X$, $\Delta M_y$, $\Delta F_z$ bzw. der Änderung als Eingangsgrößen berücksichtigt werden.

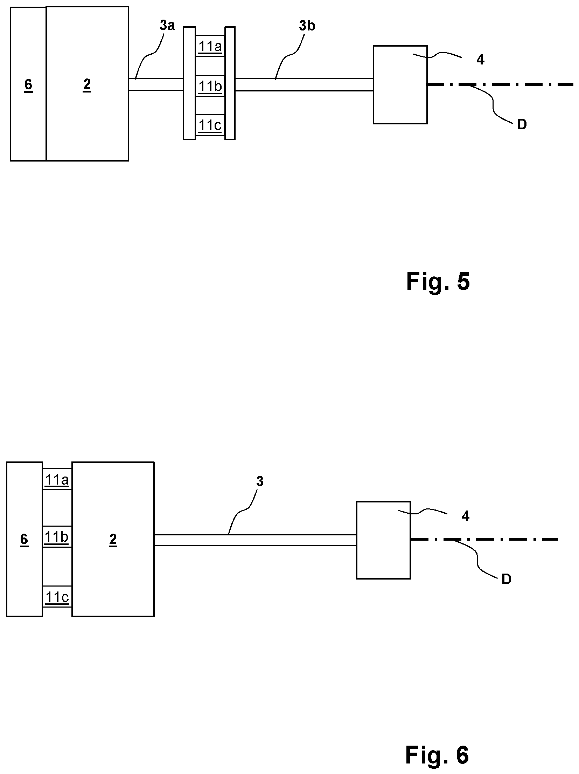

Die **Fig. 5 bis 7** zeigen verschiedene Messanordnungen zur Bestimmung einer Kraft und/oder eines Drehmoments, welches an einem Elektromotor 2 anliegt. Eine solche Messanordnung kann sowohl in einem System zum Kalibrieren 10 einer Invertersteuereinrichtung 1, beispielsweise in dem in Fig. 1 gezeigten Ausführungsbeispiel, als auch in einem System 20 zum Regeln eines Elektromotors 2, beispielsweise in dem in Fig. 3 gezeigten Ausführungsbeispiel, zum Einsatz kommen.

Die Fig. 5 bis 7 zeigen jeweils einen Abschnitt bzw. Ausschnitt eines Antriebsstrangs, wobei der Elektromotor 2 durch eine Abstützvorrichtung 6 insbesondere eine Grundplatte, gestützt. Der Elektromotor 2 treibt beispielsweise eine Welle 3, 3a an oder wird von dieser angetrieben.

Die Welle 3, 3a, 3b dreht sich dabei jeweils um eine Drehachse D, deren Verlängerung als gestrichpunktete Linie in allen drei Figuren angedeutet ist.

In **Fig. 5** sind drei Piezoelemente 11a, 11b, 11c zwischen einem Flansch eines ersten Wellenteils 3a und einem Flansch eines zweiten Wellenteils 3b angeordnet.

Die Piezoelemente 11a, 11b, 11c werden dabei vorzugsweise kraft- bzw. reibschlüssig an den Stirnflächen zwischen den Flanschen gehalten, so dass sämtliche Krafteinwirkung über die Stirnflächen der Piezoelemente 11a, 11b, 11c erfolgt. Vorzugsweise bilden die Piezoelemente 11a, 11b, 11c hierbei einen Krafthauptschluss in Bezug auf einen Kraftfluss. Weiter vorzugsweise ist ein geringer oder sogar kein Kraftnebenschluss vorhanden.

Der erste Wellenteil 3a ist mit einem Rotor (nicht dargestellt) des Elektromotors drehfest verbunden oder verbindbar. Der zweite Wellenteil 3b ist mit einer Last 4 drehfest verbunden oder verbindbar. Die Last 4 kann auf einem Prüfstand beispielsweise durch ein oder mehrere Dynamometer gebildet werden.

Ein Kraftfluss verläuft von dem Elektromotor 2 über den ersten Wellenteil 3a, die Piezoelemente 11a, 11b, 11c, den zweiten Wellenteil 3b zu der Last 4 oder umgekehrt.

Die mit einer Kraftmessung an den Piezoelementen 11a, 11b, 11c bestimmten Kraftkomponenten und/oder Drehmomentkomponenten entsprechen wenigstens im Wesentlichen jenen Kraftkomponenten und/oder Drehmomentkomponenten, welche auch an dem Elektromotor 2 über den ersten Wellenteil 3a anliegen.

Bei der Messanordnung gemäß **Fig. 6** sind die Piezoelemente 11a, 11b, 11c zwischen dem Elektromotor 2 und einer Abstützvorrichtung 6 angeordnet, welche als Abstützvorrichtung bzw. Lager 6 für den Elektromotor 2 dient. In der in Fig. 6 gezeigten Messanordnung verläuft der Kraftfluss mithin von der Abstützvorrichtung 6, welche beispielsweise durch eine Grundplatte gebildet wird, über die Piezoelemente 11a, 11b, 11c, den Elektromotors 2, die Welle 3 zu der Last 4, welche insbesondere durch ein oder mehrere Dynamometer gebildet wird.

Auch in dieser Messanordnung werden Kräfte und/oder Drehmomente vorzugsweise ausschließlich über die Stirnseite der Piezoelemente 11a, 11b, 11c in diese eingeleitet und die Piezoelemente 11a, 11b, 11c sind vorzugsweise kraftschlüssig, insbesondere reibschlüssig, zwischen dem Elektromotor 2 und der Abstützvorrichtung 6 befestigt. Auch bei dieser Messanordnung findet dieser Hauptkraftschluss über die Piezoelemente 11a, 11b, 11c statt, wobei vorzugsweise nur ein geringer oder kein Kraftnebenschluss über andere Elemente vorliegt.

In der Messanordnung nach Fig. 6 werden die Kraftkomponenten und/oder Drehmomentkomponenten, welche an dem Elektromotor 2 anliegen, jedoch nicht direkt gemessen, sondern indirekt über die Reaktionskräfte bzw. Reaktionsmomente, welche die Abstützvorrichtung 6 als Widerlager dem Elektromotors 2 bereitstellt. Dies hat über eine Messanordnung nach Fig. 5 den Vorteil, dass die Piezoelemente 11a, 11b, 11c bzw. eine Messeinrichtung, deren Bestandteil diese sind, die rotierende Masse der Welle 3 bzw. deren Trägheitsmoment nicht beeinflussen und somit keinen Effekt auf die Kraftmessung haben. Darüber hinaus wird die Qualität des Messsignals bei direkter Verbindung mit dem Stator nicht durch Elastizitäten durch die Messanordnung der Piezoelemente 11a, 11b, 11c und durch eine zusätzliche Masse in der Welle beeinträchtigt und ist daher besonders direkt und starr.

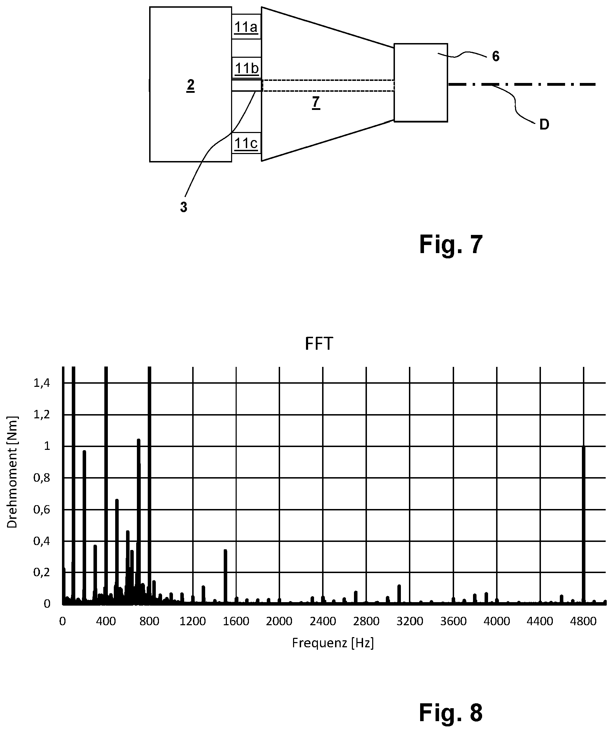

Die Messanordnung gemäß **Fig. 7** entspricht im Wesentlichen der Messanordnung von Fig. 6. Auch bei dieser Messanordnung wird eine Kraftmessung der Reaktionskräfte vorgenommen.

Die Abstützvorrichtung 6 ist in diesem Fall jedoch keine Grundplatte oder Bodenplatte, sondern eine Einrichtung zum Aufbringen einer Last, insbesondere ein Dynamometer oder ein Getriebe, , welche durch die Welle 3 betrieben wird und an dessen Gehäuse oder Konstruktion 7 der Elektromotor abgestützt wird. Beispielsweise ist das Element 7 eine Getriebeglocke.

Der Kraftfluss verläuft in diesem Fall von der Einrichtung 6 über die Getriebeglocke 7, Piezoelemente 11a, 11b, 11c, den Elektromotor 2 und die Welle 3 wieder zu der Einrichtung 6. Im gezeigten Fall wird die Einrichtung 6 durch ein Getriebe gebildet, welches vorzugsweise wiederum mit einem Dynamometer oder mehreren Dynamometern drehfest verbunden ist.

**Fig. 8** zeigt ein Diagramm einer Frequenzanalyse, welches eine Fast-Fourier-Transformationsanalyse der Drehmomentänderungen bzw. der Amplituden von Drehmomentschwingungen im Betrieb eines Elektromotors 2 zeigt. Die Drehmomentänderungen wurden mittels der im Vorhergehenden beschriebenen Verfahren 100, 200 und Systemen 10, 20 bestimmt.

Dabei werden die Amplituden der Drehmomentschwingung in Newtonmeter in Abhängigkeit von der jeweiligen Drehzahl des Rotors des Elektromotors 2 in Hertz angegeben.

Der bei der Messung eingesetzte Elektromotor 2 war eine Drehstrom-Synchronmaschine mit 48 Schlitzen bzw. Slots und vier Polpaaren. Mittels der im Vorhergehenden beschriebenen Messsysteme 10, 20 und Verfahren 100, 200 konnte festgestellt werden, dass Spitzen der Drehmomentwelligkeit insbesondere bei Frequenzen auftreten, welche ein Vielfaches von 48 oder 4 sind.

**Fig. 9** ist wiederum ein Diagramm einer Fast-Fourier-Transformationsanalyse, wobei Amplituden von Drehmomentschwingungsamplituden des Rotors des Elektromotors 2 gegenüber dem Frequenzspektrum von 0 bis 220 Hz aufgetragen sind. Hierbei sind zwei Kalibrierungsstände aufgetragen: eine Basiskalibration BC und eine mittels des Verfahrens 100 zur Kalibrierung optimierte Kalibration OC.

Als Kriterien für die Optimierung der Steuercharakteristik 5 dienten in diesem Fall insbesondere die Intensität der 4., 8., 24. und 48. harmonische Oberschwingung des Schwingungssystems des Elektromotors 2 und ein Wert eines Integrals über die Intensität in Abhängigkeit von der Frequenz.

Im Vergleich zur Basiskalibration BC weist die optimierte Kalibration wesentlich geringer ausgeprägte Amplituden der jeweiligen Schwingungsmodi auf.

**Fig. 10** zeigt einen zeitlichen Verlauf eines Drehmoments an einer Welle in Abhängigkeit der Zeit. Eine Drehmomentanforderung erfolgt zum Zeitpunkt t=0, wobei die Drehzahl der Welle konstant gehalten wird.

Zu erkennen sind eine Verzögerungszeit $T_D$ von der Drehmomentanforderung bis zu einem Anstieg des Drehmoments, eine Anstiegszeit $T_R$ vom Erreichen von 10% des Werts der Drehmomentanforderung bis 90% des Werts $M_S$ der Drehmomentanforderung und eine Überschwingungsintensität $\Delta I$ in Bezug auf den neu eingestellten Wert $M_S$ der Drehmomentanforderung. $M_A$ gibt den zeitlichen Istwert-Drohmomentverlauf an.

Es wird darauf hingewiesen, dass es sich bei den beschriebenen Ausführungsbeispielen lediglich um Beispiele handelt, die den Schutzbereich, die Anwendung und den Aufbau in keiner Weise einschränken sollen. Vielmehr wird dem Fachmann durch die vorausgehende Beschreibung ein Leitfaden für die Umsetzung mindestens eines Ausführungsbeispiels gegeben, wobei diverse Änderungen, insbesondere im Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt. Insbesondere können einzelne Ausführungsbeispiele miteinander kombiniert werden.

**Bezugszeichenliste**

| | |
|---|---|
| 1 | Steuereinrichtung |
| 3, 3a, 3b | Welle |
| 4 | Last |
| 5 | Steuercharakteristik |

| 6 | Abstützvorrichtung |
|---|---|
| 10 | System zum Kalibrieren |
| 11a, 11b, 11c | Piezoelement |
| 12 | Auswertmittel |
| 13 | Mittel zum Anpassen |
| 20 | System zum Regeln |
| 21a, 21b, 21c | Piezoelement |
| 22 | Auswertmittel |
| 23 | Steuermittel |
| D | Drehachse |
| IN1, IN2 | Eingangsparameter |
| $I_d$ | Längskomponente des Polradstroms |
| $I_q$ | Querkomponente des Polradstroms |
| $U_S$ | Ständerspannung |
| $f_S$ | Ständerfrequenz |
| $I_S$ | Ständerstrom |
| $T_D$ | Verzögerungszeit |
| $T_R$ | Anstiegszeit |
| $\Delta I$ | Überschwingungsintensität |
| $M_S$ | Drehmomentanforderung |

## Patentansprüche

1. Verfahren (100) zum Kalibrieren einer Steuereinrichtung (1), insbesondere Inverstersteuereinrichtung, eines Elektromotors (2), insbesondere Drehstrommotors, folgende Arbeitsschritte aufweisend:

   - Betreiben (101) des Elektromotors (2) als Teil eines Kraftflusses;
   - Durchführen (102) einer Kraftmessung mittels Piezoelementen (11a, 11b, 11c), welche eingerichtet sind, um eine Kraft, welche über zwei an das Piezoelement (21a, 21b, 21c) anliegende Flächen wirkt, zu messen, und welche in der Weise in dem Kraftfluss angeordnet sind, dass der Kraftfluss, insbesondere ausschließlich, an den Piezoelementen (11a, 11b, 11c) anliegt, wobei die Piezoelemente (11a, 11b, 11c) einen Krafthauptschluss in Bezug auf den Kraftfluss bilden; und
   - Anpassen (103) einer Steuercharakteristik (5) der Steuereinrichtung (1) auf der Grundlage wenigstens einer aus der Kraftmessung abgeleiteten Kraftkomponente, insbesondere einer Änderung der wenigstens einen Kraftkomponente, und/oder wenigstens einer aus der Kraftmessung abgeleiteten Drehmomentkomponente, insbesondere einer Änderung der Drehmomentkomponente ($\Delta M_x$, $\Delta M_y$, $\Delta F_z$).

2. Verfahren (200) zum Regeln eines Elektromotors (2), insbesondere Drehstrommotors, folgende Arbeitsschritte aufweisend:

   - Betreiben (201) des Elektromotors (2) als Teil eines Kraftflusses;
   - Durchführen (202) einer Kraftmessung mittels Piezoelementen (21a, 21b, 21c), welche in der Weise in dem Kraftfluss angeordnet sind, dass der Kraftfluss, insbesondere ausschließlich, an den Piezoelementen (21a, 21b, 21c) anliegt, wobei die Piezoelemente (11a, 11b, 11c) einen Krafthauptschluss in Bezug auf den Kraftfluss bilden; und
   - Einstellen (203) von wenigstens einem Steuerparameter ($I_d$, $I_q$; $U_S$, $I_S$, $f_S$) der Elektromaschine (2) auf der Grundlage wenigstens einer aus der Kraftmessung abgeleiteten Kraftkomponente, insbesondere einer Änderung der wenigstens einen Kraftkomponente, und/oder wenigstens einer aus der Kraftmessung abgeleiteten Drehmomentkomponente, insbesondere einer Änderung der Drehmomentkomponente ($\Delta M_x$, $\Delta M_y$, $\Delta F_z$).

3. Verfahren (100, 200) nach Anspruch 1 oder 2, wobei der Elektromotor (2) eine Drehstrom-Synchronmaschine ist und wenigstens ein Steuerparameter ein Polradstrom ist, insbesondere dessen Längskomponente ($I_d$) und Querkomponente ($I_q$) im komplexen Zeigerdiagramm.

4. Verfahren (100, 200) nach Anspruch 1 oder 2, wobei der Elektromotor (2) eine Drehstrom-Asynchronmaschine ist und der wenigstens eine Steuerparameter eine Ständerspannung ($U_S$) und/oder eine Ständerfrequenz ($f_S$) oder der wenigstens eine Steuerparameter ein Ständerstrom ($I_S$) und/oder eine Ständerfrequenz ($f_S$) ist.

5. Verfahren (100, 200) nach einem der vorhergehenden Ansprüche, wobei wenigstens ein Kriterium für das Anpassen einer Steuercharakteristik oder das Einstellen von wenigstens einem Steuerparameter ($I_d$, $I_q$; $U_S$, $I_S$, $f_S$) aus der folgenden Gruppe ausgewählt wird:

   Amplituden einer harmonischen Schwingung der Änderung des Drehmoments und/oder der Kraft; und/oder ein Integral der Intensität von Amplituden von Schwingungen der Änderung des Drehmoments und/oder der Kraft über ein vorgegebenes Frequenzspektrum.

6. Verfahren (100, 200) nach einem der vorhergehenden Ansprüche, wobei wenigstens ein Kriterium für das Anpassen einer Steuercharakteristik oder das Einstellen von wenigstens einem Steuerparameter ($I_d$, $I_q$; $U_S$, $I_S$, $f_S$) aus der folgenden Gruppe ausgewählt wird:

   eine Anstiegsdauer des Drehmoments von 10% einer Drehmomentanforderung bis 90% der Drehmomentanforderung;
   eine Verzögerungszeit ($T_D$) von einem Zeitpunkt einer Drehmomentanforderung bis zum Anstieg des Drehmoments; und/oder
   eine Intensität ($\Delta I$) einer Amplitude eines Überschwingens in Bezug auf einen Wert von 100% einer Drehmomentanforderung.

7. Verfahren (100, 200) nach einem der vorhergehenden Ansprüche, wobei Kraftkomponenten und Drehmomentkomponenten mittels eines Gleichungssystems auf der Grundlage von Messsignalen der einzelnen Piezoelemente (11a, 11b, 11c; 21a, 21b, 21c) bestimmt werden.

8. Verfahren (100, 200) nach einem der vorhergehenden Ansprüche, wobei Messsignale der einzelnen Piezoelemente (11a, 11b, 11c; 21a, 21b, 21c) in Anteile, welche zu den jeweiligen abzuleitenden Kraftkomponenten und/oder Drehmomentkomponenten beitragen, zerlegt werden.

9. Verfahren (100, 200) nach einem der vorhergehenden Ansprüche, wobei, insbesondere alle, Beiträge der einzelnen Piezoelemente zu den jeweiligen abzuleitenden Kraftkomponenten und/oder Drehmomentkomponenten berücksichtigt werden.

10. Verfahren (100, 200) nach einem der vorhergehenden Ansprüche, wobei der Elektromotor (2) zusammen mit einer Welle (3a, 3b), welche einen Kraftfluss von oder zu dem Elektromotor (2) überträgt, betrieben wird, wobei die Piezoelemente (11a, 11b, 11c; 21a, 21b, 21c) zwischen einem ersten Teil der Welle (3a) und einem zweiten Teil der Welle (3b) in der Weise angeordnet sind, dass mittels der Piezoelemente (11a, 11b, 11c; 21a, 21b, 21c) eine Kraft, insbesondere Scherkraft, zwischen dem ersten Teil (3a) und dem zweiten Teil (3b) messbar ist.

11. Verfahren (100, 200) nach einem der Ansprüche 1 bis 9, wobei die Piezoelemente (11a, 11b, 11c; 21a, 21b, 21c) eine Kraft, insbesondere Scherkraft, zwischen dem Elektromotor (2) und einer Abstützvorrichtung (6) zum Abstützen des Elektromotors (2) messen.

12. Verfahren (100, 200) nach einem der Ansprüche 1 bis 9, wobei der Elektromotor (2) zusammen mit einer Welle (3), welche einen Kraftfluss von oder zu dem Elektromotor überträgt, betrieben wird, wobei ein Messsystem aus den Piezoelementen (11a, 11b, 11c; 21a, 21b, 21c) eine rotierende Masse der Welle (3) und/oder eine rotierende Masse rotierender Teile einer Gesamtheit aus Welle (3) und dem Elektromotor (2) nicht verändert.

13. System (10) zum Kalibrieren einer Steuereinrichtung (1), insbesondere Invertersteuereinrichtung, eines Elektromotors (2), insbesondere Drehstrommotors, welcher Teile eines Kraftflusses ist, aufweisend:

   - Piezoelemente (11a, 11b, 11c) zum Durchführen einer Kraftmessung, wobei die Piezoelemente (21a, 21b, 21c) eingerichtet sind, um eine Kraft, welche über zwei an das Piezoelement (21a, 21b, 21c) anliegende Flächen wirkt, zu messen, und in dem Kraftfluss in der Weise angeordnet sind, dass der Kraftfluss, insbesondere ausschließlich, an den Piezoelementen anliegt, wobei die Piezoelemente (11a, 11b, 11c) einen Krafthauptschluss in Bezug auf den Kraftfluss bilden;
   - Auswertmittel (12), eingerichtet zum Ableiten wenigstens einer Kraftkomponente, insbesondere eine Änderung der wenigstens einen Kraftkomponente, und/oder wenigstens eine Drehmomentkomponente, insbesondere eine Änderung der wenigstens einen Drehmomentkomponente, aus der Kraftmessung; und
   - Mittel (13), eingerichtet zum Anpassen einer Steuercharakteristik (5) der Steuereinrichtung (1) auf der Grundlage der wenigstens einen aus der Kraftmessung abgeleiteten Kraftkomponente und/oder der wenigstens einen aus der Kraftmessung abgeleiteten Drehmomentkomponente ($\Delta M_x$, $\Delta M_y$, $\Delta F_z$).

14. System (20) zum Regeln eines Elektromotors (2), insbesondere Drehstrommotors, welcher Teil eines Kraftflusses ist, insbesondere in einem Fahrzeug, aufweisend:

- Piezoelemente (21a, 21b, 21c), eingerichtet zum Durchführen einer Kraftmessung, wobei die Piezoelemente (21a, 21b, 21c) eingerichtet sind, um eine Kraft, welche über zwei an das Piezoelement (21a, 21b, 21c) anliegende Flächen wirkt, zu messen, und in dem Kraftfluss in der Weise angeordnet sind, dass der Kraftfluss, insbesondere ausschließlich, an den Piezoelementen anliegt, wobei die Piezoelemente (11a, 11b, 11c) einen Krafthauptschluss in Bezug auf den Kraftfluss bilden;
- Auswertmittel (22), eingerichtet zum Ableiten wenigstens einer Kraftkomponente, insbesondere eine Änderung der wenigstens einen Kraftkomponente, und/oder wenigstens eine Drehmomentkomponente, insbesondere eine Änderung der wenigstens einen Drehmomentkomponente, aus der Kraftmessung; und
- Steuermittel (23), eingerichtet zum Einstellen von wenigstens einem Steuerparameter ($I_d$, $I_q$; $U_S$, $I_S$, $f_S$) der Elektromaschine (2) auf der Grundlage der wenigstens einen aus der Kraftmessung abgeleiteten Kraftkomponente und/oder der wenigstens einen aus der Kraftmessung abgeleiteten Drehmomentkomponente ($\Delta M_x$, $\Delta M_y$, $\Delta F_z$).

15. Prüfstand für einen Elektromotor, wobei der Prüfstand wenigstes eine Abstützeinrichtung (6) für den Elektromotor und eine Last (4) aufweist und der Elektromotor in einem Kraftfluss zwischen der Abstützeinrichtung (6) und der Last (4) des Prüfstands anordenbar ist, wobei der Prüfstand des Weiteren ein System (10) nach Anspruch 13 aufweist.

**Claims**

1. Method (100) for calibrating a control device (1), in particular an inverter control device, of an electric motor (2), in particular a three-phase motor, comprising the following steps:

- Operating (101) the electric motor (2) as part of a force flow;
- Performing (102) a force measurement by means of piezo elements (11a, 11b, 11c) which are adapted to measure a force acting via two surfaces abutting the piezo element (21a, 21b, 21c) and which are arranged in the force flow in such a way that the force flow is applied, in particular exclusively, to the piezo elements (11a, 11b, 11c), the piezo elements (11a, 11b, 11c) forming a force main circuit with respect to the force flow; and
- Adjusting (103) a control characteristic (5) of the control device (1) on the basis of at least one force component derived from the force measurement, in particular a change in the at least one force component, and/or at least one torque component derived from the force measurement, in particular a change in the torque component ($\Delta M_x$, $\Delta M_y$, $\Delta F_z$).

2. Method (200) for controlling an electric motor (2), in particular a three-phase motor, comprising the following steps:

- Operating (201) the electric motor (2) as part of a force flow;
- Performing (202) a force measurement by means of piezo elements (21a, 21b, 21c) which are arranged in the force flow in such a way that the force flow is applied, in particular exclusively, to the piezo elements (21a, 21b, 21c), the piezo elements (11a, 11b, 11c) forming a force main circuit with respect to the force flow; and
- Setting (203) at least one control parameter ($I_d$, $I_q$; $U_S$, $I_S$, $f_S$) of the electric machine (2) on the basis of at least one force component derived from the force measurement, in particular a change in the at least one force component, and/or at least one torque component derived from the force measurement, in particular a change in the torque component ($\Delta M_x$, $\Delta M_y$, $\Delta F_z$).

3. Method (100, 200) according to claim 1 or 2, wherein the electric motor (2) is a three-phase synchronous machine and at least one control parameter is a pole wheel current, in particular its longitudinal component ($I_d$) and transverse component ($I_q$) in the complex pointer diagram.

4. Method (100, 200) according to claim 1 or 2, wherein the electric motor (2) is a three-phase asynchronous machine and the at least one control parameter is a stator voltage ($U_S$) and/or a stator frequency ($f_S$) or the at least one control parameter is a stator current ($I_S$) and/or a stator frequency ($f_S$).

5. The method (100, 200) according to any one of the preceding claims, wherein at least one criterion for adjusting a control characteristic or setting at least one control parameter ($I_d$, $I_q$; $U_S$, $I_S$, $f_S$) is selected from the following group:

   Amplitudes of a harmonic oscillation of the change in torque and/or force; and/or
   an integral of the intensity of amplitudes of oscillations of the change in torque and/or force over a given frequency spectrum.

6. The method (100, 200) according to any one of the preceding claims, wherein at least one criterion for adjusting a control characteristic or setting at least one control parameter ($I_d$, $I_q$; $U_S$, $I_S$, $f_S$) is selected from the following group:

   a torque rise time of 10% of a torque demand up to 90% of the torque demand;
   a delay time ($T_D$) from the time of a torque request until the torque increases; and/or
   an intensity ($\Delta$ I) of an amplitude of an overshoot in relation to a value of 100% of a torque requirement.

7. Method (100, 200) according to one of the preceding claims, wherein force components and torque components are determined by means of a system of equations on the basis of measurement signals of the individual piezo elements (11a, 11b, 11c; 21a, 21b, 21c).

8. Method (100, 200) according to one of the preceding claims, wherein measurement signals of the individual piezo elements (11a, 11b, 11c; 21a, 21b, 21c) are decomposed into portions which contribute to the respective force components and/or torque components to be derived.

9. Method (100, 200) according to one of the preceding claims, wherein, in particular all, contributions of the individual piezo elements to the respective force components and/or torque components to be derived are taken into account.

10. Method (100, 200) according to one of the preceding claims, wherein the electric motor (2) is operated together with a shaft (3a, 3b) which transmits a force flow from or to the electric motor (2), wherein the piezo elements (11a, 11b, 11c; 21a, 21b, 21c) are arranged between a first part of the shaft (3a) and a second part of the shaft (3b) in such a way that a force, in particular shear force, can be measured between the first part (3a) and the second part (3b) by means of the piezo elements (11a, 11b, 11c; 21a, 21b, 21c).

11. Method (100, 200) according to any one of claims 1 to 9, wherein the piezo elements (11a, 11b, 11c; 21a, 21b, 21c) measure a force, in particular shear force, between the electric motor (2) and a support device (6) for supporting the electric motor (2).

12. The method (100, 200) according to any one of claims 1 to 9, wherein the electric motor (2) is operated together with a shaft (3) transmitting a force flow from or to the electric motor, wherein a measuring system of the piezo elements (11a, 11b, 11c; 21a, 21b, 21c) does not change a rotating mass of the shaft (3) and/or a rotating mass of rotating parts of an assembly of the shaft (3) and the electric motor (2).

13. System (10) for calibrating a control device (1), in particular an inverter control device, of an electric motor (2), in particular a three-phase motor, which is part of a force flow, comprising:

   - Piezo elements (11a, 11b, 11c) for performing a force measurement, wherein the piezo elements (21a, 21b, 21c) are adapted to measure a force acting via two surfaces abutting the piezo element (21a, 21b, 21c), and are arranged in the force flow in such a way that the force flow is applied, in particular exclusively, against the piezo elements, wherein the piezo elements (11a, 11b, 11c) form a force main circuit with respect to the force flow;
   - Evaluation means (12), set up for deriving at least one force component, in particular a change in the at least one force component, and/or at least one torque component, in particular a change in the at least one torque component, from the force measurement; and
   - Means (13) arranged for adjusting a control characteristic (5) of the control device (1) on the basis of the at least one force component derived from the force measurement and/or the at least one torque component ($\Delta M_x$, $\Delta M_y$, $\Delta F_z$) derived from the force measurement

14. System (20) for controlling an electric motor (2), in particular a three-phase motor, which is part of a force flow, in particular in a vehicle, comprising:

   - Piezo elements (21a, 21b, 21c) set up for performing a force measurement, wherein the piezo elements (21a, 21b, 21c) are adapted to measure a force acting via two surfaces abutting the piezo element (21a, 21b, 21c) and are arranged in the force flow in such a way that the force flow is applied, in particular exclusively, against the piezo elements, the piezo elements (11a, 11b, 11c) forming a force main circuit with respect to the force flow;

- Evaluation means (22), set up for deriving at least one force component, in particular a change in the at least one force component, and/or at least one torque component, in particular a change in the at least one torque component, from the force measurement; and

- Control means (23), set up for setting at least one control parameter ($I_d$, $I_q$; $U_S$, $I_S$, $f_S$) of the electric machine (2) on the basis of the at least one force component derived from the force measurement and/or the at least one torque component ($\Delta M_x$, $\Delta M_y$, $\Delta F_z$) derived from the force measurement.

15. Test stand for an electric motor, wherein the test stand has at least one support device (6) for the electric motor and a load (4) and the electric motor can be arranged in a force flow between the support device (6) and the load (4) of the test stand, wherein the test stand furthermore has a system (10) according to claim 13.

**Revendications**

1. Procédé (100) destiné à étalonner un équipement de commande (1), en particulier un équipement de commande à onduleur, d'un moteur électrique (2), en particulier d'un moteur triphasé, présentant des étapes de travail suivantes :

   - de fonctionnement (101) du moteur électrique (2) dans le cadre d'un flux de force ;
   - de réalisation (102) d'une mesure de force au moyen d'éléments piézoélectriques (11a, 11b, 11c), qui sont mis au point pour mesurer une force qui agit sur deux surfaces reposant sur l'élément piézoélectrique (21a, 21b, 21c), et qui sont disposés dans le flux de force de manière à ce que le flux de force repose, en particulier exclusivement, sur les éléments piézoélectriques (11a, 11b, 11c), dans lequel les éléments piézoélectriques (11a, 11b, 11c) forment une liaison de force série par rapport au flux de force ; et
   - d'adaptation (103) d'une caractéristique de commande (5) de l'équipement de commande (1) sur la base au moins d'une composante de force déduite de la mesure de force, notamment d'une modification de l'au moins une composante de force, et/ou d'au moins une composante de couple de rotation déduite de la mesure de force, en particulier d'une modification de la composante de couple de rotation ($\Delta M_x$, $\Delta M_y$, $\Delta F_z$ ).

2. Procédé (200) de régulation d'un moteur électrique (2), en particulier d'un moteur triphasé, présentant des étapes de travail suivantes :

   - de fonctionnement (201) du moteur électrique (2) dans le cadre d'un flux de force ;
   - de réalisation (202) d'une mesure de force au moyen d'éléments piézoélectriques (21a, 21b, 21c), qui sont disposés dans le flux de force de telle manière que le flux de force repose, en particulier exclusivement, sur les éléments piézoélectriques (21a, 21b, 21c), dans lequel les éléments piézoélectriques (11a, 11b, 11c) forment une liaison de force série par rapport au flux de force ; et
   - de réglage (203) d'au moins un paramètre de commande ($I_d$, $I_q$ ; $U_s$, $I_s$, $f_s$ ) de la machine électrique (2) sur la base au moins d'une composante de force déduite de la mesure de force, en particulier d'une modification de l'au moins une composante de force, et/ou de l'au moins une composante de couple de rotation déduite de la mesure de force, en particulier d'une modification de la composante de couple de rotation ($\Delta M_x$, $\Delta M_y$, $\Delta F_z$ ).

3. Procédé (100, 200) selon la revendication 1 ou 2, dans lequel le moteur électrique (2) est une machine synchrone triphasée et au moins un paramètre de commande est un courant de roue polaire, en particulier sa composante longitudinale ($I_d$) et sa composante transversale ($I_q$) dans le diagramme vectoriel complexe.

4. Procédé (100, 200) selon la revendication 1 ou 2, dans lequel le moteur électrique (2) est une machine asynchrone triphasée et l'au moins un paramètre de commande est une tension de stator ($U_s$) et/ou une fréquence de stator ($f_s$) ou l'au moins un paramètre de commande est un courant de stator ($I_s$) et/ou une fréquence de stator ($f_s$).

5. Procédé (100, 200) selon l'une quelconque des revendications précédentes, dans lequel au moins un critère d'adaptation d'une caractéristique de commande ou de réglage d'au moins un paramètre de commande ($I_d$, $I_q$ ; $U_s$, $I_s$, $f_s$ ) est choisi dans le groupe suivant :

   les amplitudes d'une oscillation harmonique du changement de couple de rotation et/ou de la force ; et/ou
   une intégrale de l'intensité d'amplitudes d'oscillations du changement de couple de rotation et/ou de la force sur un spectre de fréquence donné.

6. Procédé (100, 200) selon l'une quelconque des revendications précédentes, dans lequel au moins un critère d'adaptation d'une caractéristique de commande ou de réglage d'au moins un paramètre de commande ($I_d$, $I_q$ ; $U_s$, $I_s$, $f_s$ ) est choisi dans le groupe suivant :

une durée de montée du couple de rotation de 10 % d'une demande de couple de rotation jusqu'à 90 % de la demande de couple de rotation ;
un temps de décélération ($T_D$) depuis un moment de demande de couple de rotation jusqu'à l'augmentation du couple de rotation ; et/ou
une intensité ($\Delta I$) d'une amplitude d'un dépassement par rapport à une valeur de 100 % d'une demande de couple de rotation.

7. Procédé (100, 200) selon l'une quelconque des revendications précédentes, dans lequel des composantes de force et des composantes de couple de rotation sont déterminées au moyen d'un système d'équation sur la base de signaux de mesure des divers éléments piézoélectriques (11a, 11b, 11c ; 21a, 21b, 21c).

8. Procédé (100, 200) selon l'une quelconque des revendications précédentes, dans lequel des signaux de mesure des divers éléments piézoélectriques (11a, 11b, 11c ; 21a, 21b, 21c) sont décomposés en proportions, qui contribuent aux composantes respectives de force et/ou de couple de rotation à déduire.

9. Procédé (100, 200) selon l'une quelconque des revendications précédentes, dans lequel, en particulier toutes, les contributions des divers éléments piézoélectriques aux composantes respectives de force et/ou de couple de rotation à déduire sont prises en compte.

10. Procédé (100, 200) selon l'une quelconque des revendications précédentes, dans lequel le moteur électrique (2) fonctionne conjointement avec un arbre (3a, 3b), qui transmet un flux de force de ou vers le moteur électrique (2), dans lequel les éléments piézoélectriques (11a, 11b, 11c ; 21a, 21b, 21c) sont disposées entre une première partie de l'arbre (3a) et une deuxième partie de l'arbre (3b) de telle manière qu'une force, en particulier une force de cisaillement, peut être mesurée entre la première partie (3a) et la deuxième partie (3b) au moyen des éléments piézoélectriques (11a, 11b, 11c ; 21a, 21b, 21c).

11. Procédé (100, 200) selon l'une quelconque des revendications 1 à 9, dans lequel les éléments piézoélectriques (11a, 11b, 11c ; 21a, 21b, 21c) mesurent une force, en particulier une force de cisaillement, entre le moteur électrique (2) et un dispositif d'appui (6) pour soutenir le moteur électrique (2).

12. Procédé (100, 200) selon l'une quelconque des revendications 1 à 9, dans lequel le moteur électrique (2) fonctionne conjointement avec un arbre (3), qui transmet un flux de force de ou vers le moteur électrique, dans lequel un système de mesure composé des éléments piézoélectriques (11a, 11b, 11c ; 21a, 21b, 21c), ne modifie pas une masse rotative de l'arbre (3) et/ou une masse rotative de pièces rotatives d'un ensemble constitué de l'arbre (3) et du moteur électrique (2).

13. Système (10) destiné à étalonner un équipement de commande (1), en particulier un équipement de commande à onduleur, d'un moteur électrique (2), en particulier d'un moteur triphasé, qui fait partie d'un flux de force, présentant :

- des éléments piézoélectriques (11a, 11b, 11c) destinés à réaliser une mesure de force, dans lequel les éléments piézoélectriques (21a, 21b, 21c) sont mis au point pour mesurer une force, qui agit sur deux surfaces reposant sur l'élément piézoélectrique (21a, 21b, 21c), et sont disposés dans le flux de force de telle manière que le flux de force repose, en particulier exclusivement, sur les éléments piézoélectriques, dans lequel les éléments piézoélectriques (11a, 11b, 11c) forment une liaison de force série par rapport au flux de force ;
- des moyens d'évaluation (12) mis au point pour déduire de la mesure de force au moins une composante de force, en particulier une modification de l'au moins une composante de force, et/ou de l'au moins une composante de couple de rotation, en particulier une modification de l'au moins une composante de couple de rotation ; et
- des moyens (13) mis au point pour adapter une caractéristique de commande (5) de l'équipement de commande (1) sur la base de l'au moins une composante de force déduite de la mesure de force et/ou de l'au moins une composante de couple de rotation ($\Delta M_x$, $\Delta My$, $\Delta F_z$) déduite de la mesure de force.

14. Système (20) de régulation d'un moteur électrique (2), notamment d'un moteur triphasé, qui fait partie d'un flux de force, en particulier dans un véhicule, présentant :

- des éléments piézoélectriques (21a, 21b, 21c) mis au point pour réaliser une mesure de force, dans lequel les éléments piézoélectriques (21a, 21b, 21c) sont mis au point pour mesurer une force, qui agit sur deux surfaces reposant sur l'élément piézoélectrique (21a, 21b, 21c), et sont disposés dans le flux de force de telle manière que le flux de force repose, en particulier exclusivement, sur les éléments piézoélectriques, dans lequel les éléments piézoélectriques (11a, 11b, 11c) forment une liaison de force série par rapport au flux de force ;
- des moyens d'évaluation (22) mis au point pour déduire de la mesure de force au moins une composante de force, en particulier une modification de l'au moins une composante de force, et/ou de l'au moins une composante de couple de rotation, en particulier une modification de l'au moins une composante de couple de rotation ; et
- des moyens de commande (23) mis au point pour régler au moins un paramètre de commande ($I_d$, $I_q$ ; $U_s$, $I_s$, $f_s$) de la machine électrique (2) sur la base de l'au moins une composante de force déduite de la mesure de force et/ou de l'au moins une composante de couple de rotation déduite de la mesure de force ($\Delta M_x$, $\Delta M_y$, $\Delta F_z$).

15. Banc d'essai pour un moteur électrique, dans lequel le banc d'essai présente au moins un équipement de support (6) pour le moteur électrique et une charge (4) et le moteur électrique peut être disposé dans un flux de force entre l'équipement de support (6) et la charge (4) du banc d'essai, dans lequel le banc d'essai présente par ailleurs un système (10) selon la revendication 13.

IN1    IN2

$U_S$; $I_d$    $I_S$, $f_s$; $I_q$

$\Delta M_x$, $\Delta M_y$, $\Delta F_z$

**1**

**13**

**10**

**11a**

**11b**

**11c**

**2**

**12**

5

**Fig. 1**

100

101

102

103

**Fig. 2**

ΔM_x, ΔM_y, ΔF_z

IN1    IN2    5

23    22    20

U_S; I_d    I_S, f_s; I_q

21a    21b    21c

2

**Fig. 3**

200

201

202

203

**Fig. 4**

2

**Fig. 5**

**Fig. 6**

**Fig. 7**

FFT

**Fig. 8**

**Fig. 9**

**Fig. 10**

**EP 4 059 133 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014213446 A1
- WO 2019144172 A1
- WO 2019144171 A1